# EUROPEAN PATENT SPECIFICATION

(11) **EP 1 533 254 B1**
(45) Date of publication and mention of the grant of the patent: **18.07.2007**
(21) Application number: 04027197.5
(22) Date of filing: 16.11.2004
(51) Int. Cl.: B65G 1/02, A47B 57/40

(54) **System for perpendicularly and removably joining a longitudinal element and a stanchion of pallet-holding shelving**
System zum rechtwinkligen Verbinden eines länglichen Elementes mit einem Ständer eines Palettenregals
Système pour joindre perpendiculairement et de manière amovible un longeron avec un poteau d'un rayonnage pour palettes

(30) Priority: 19.11.2003 IT MI20032249
(43) Date of publication of application: 25.05.2005
(73) Proprietor: Marcegaglia Building S.p.A., 46040 Gazoldo degli Ippoliti MN (IT)
(72) Inventor: Mura, Salvatore, 20146 Milano (IT)
(74) Representative: Rapisardi, Mariacristina

(56) References cited:
- FR-A- 1 364 697
- FR-A- 1 408 895
- US-A- 4 069 638

## Description

The present invention refers to a system comprising a longitudinal element and a perpendicular plate for joining the longitudinal element to a stanchion of pallet-holding shelving.

Pallet-holding shelving essentially consists of vertical elements known as shoulders and horizontal elements known as stringers, specifically designed for the storage of load units, i.e. pallets plus goods.

Each shoulder in turn consists of two stanchions generally having a substantially rectangular profiles open at the back for the assembly of the diagonals.

As known, the pallet-holding stringer results from the longitudinal stitching of two opposite open half-profiles.

Thereafter, the perpendicular joining plates, equipped with tabs to be fitted into suitable slots in the stanchion, are welded to the ends of the resulting longitudinal element.

The assembly of a system of this type suffers from the drawback that the welding between the two half-profiles and the subsequent welding of the joining plates requires high costs together with substantial investment of time linked also to the difficulty of moving and positioning sometimes heavy and bulky components.

Moreover, such a system requires that the anti-corrosion treatment, for example zincing of the sheet metal of which it consists, be delayed until after the end of all of the welding operations.

Consequently, this leads to substantial problems of logistics, transportation, spare part supply and storage of the components. US-A-4069638 discloses a connection system according to preamble of claim 1. The technical task proposed of the present invention is, therefore, that of making a system comprising a longitudinal element and a perpendicular plate for joining the longitudinal element to a stanchion of a pallet-holding shelving that allows the aforementioned technical drawbacks of the prior art to be eliminated.

In this technical task a purpose of the invention is that of making a system comprising a longitudinal element and a perpendicular plate for joining the longitudinal element to a stanchion of a pallet-holding shelving that eliminates the need for welding between the parts so as to be simple and quick to carry out, restricting neither the selection of the time when anti-corrosion treatment of the components should be carried out nor the selection of their time of assembly, and also simplifying the logistics, transportation, spare part supply and storage of the parts of the system.

The last but not least purpose of the present invention is that of making a system comprising a longitudinal element and a perpendicular plate for joining the longitudinal element to a stanchion of a pallet-holding shelving that is extremely tough and strong mechanically.

The technical task, as well as these and other purposes, according to the present invention, are accomplished by making a system comprising a longitudinal element and a perpendicular plate for joining the longitudinal element to a stanchion of a pallet-holding shelving, according to claim 1.

Other characteristics of the present invention are, moreover, defined in the subsequent claims.

Further characteristics and advantages of the invention shall become clearer from the description of a preferred but not exclusive embodiment of the system comprising a longitudinal element and a perpendicular plate for joining the longitudinal element to a stanchion of a pallet-holding shelving according to the finding, illustrated for indicating and not limiting purposes in the attached drawings, in which:

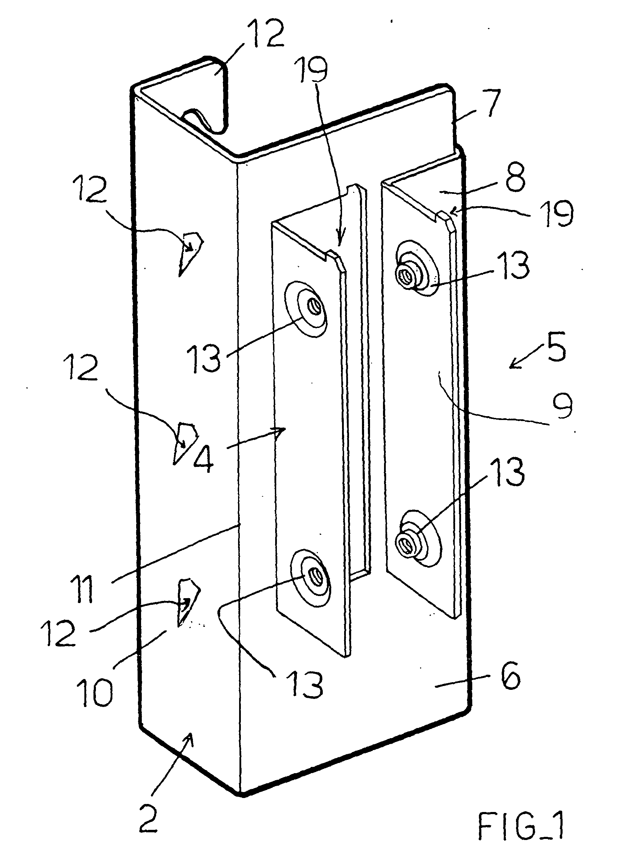

- figure 1 shows a perspective view of the joining plate according to a first embodiment of the present invention;

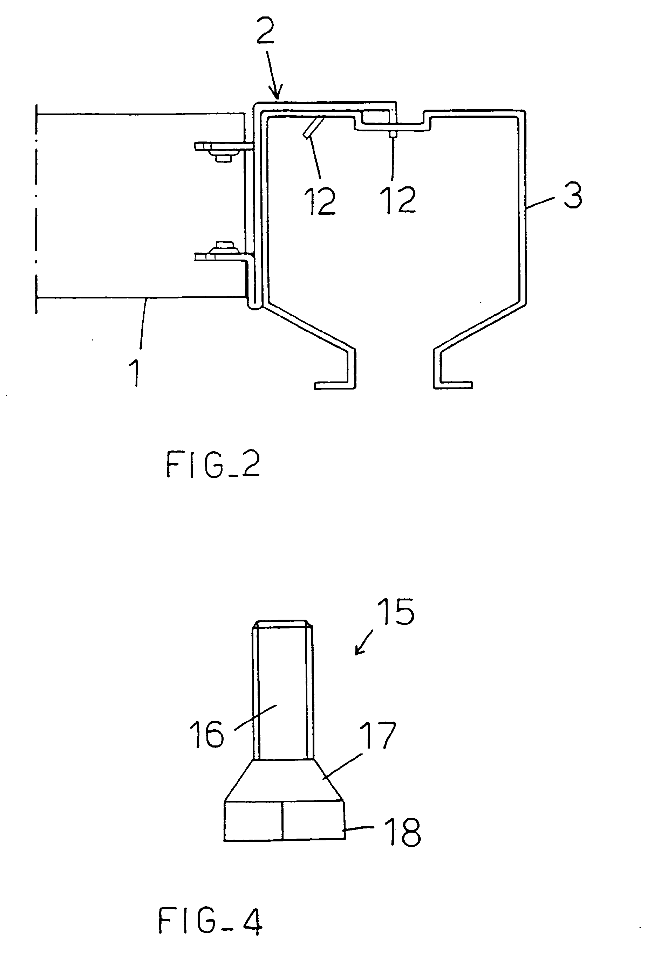

- figure 2 shows a plan view from above of the stringer-joining plate system applied to a stanchion of the pallet-holding shelving;

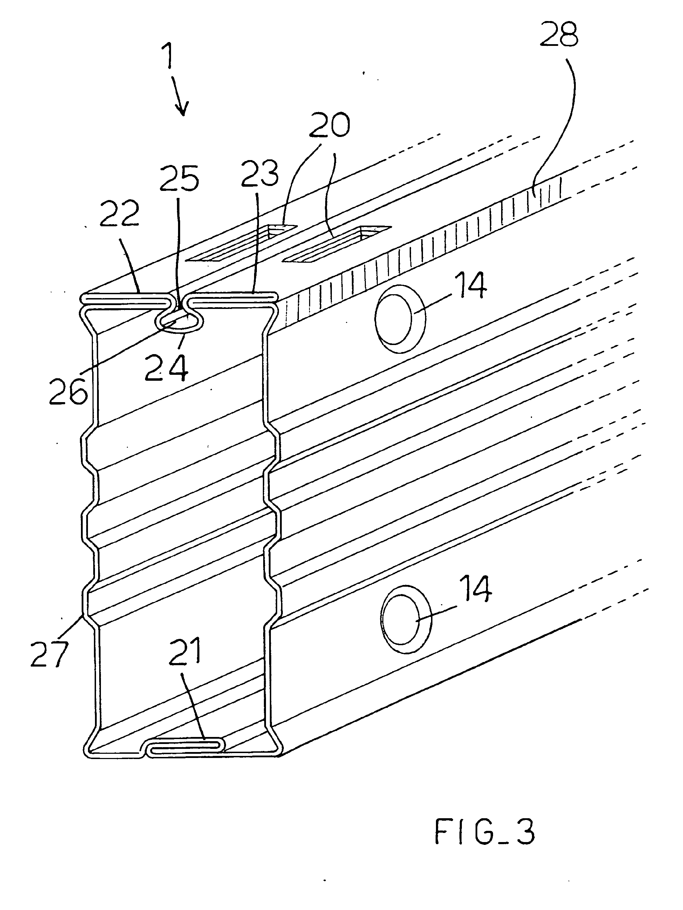

- figure 3 shows a perspective view of the stringer according to a preferred embodiment of the present finding; and
- figure 4 shows the fastening members between the stringer of figure 2 and the plate of figure 1.

With reference to the quoted figures, a system comprising a longitudinal element 1 and a plate 2 suitable for joining the longitudinal element 1 perpendicularly to a stanchion 3 of a pallet-holding shelving (not illustrated).

The longitudinal element 1 and the plate 2 consist of sheet steel.

The pallet-holding shelving generically has a plurality of shoulders to which, through the plates 2, the longitudinal elements 1, in particular stringers of the shelving, are connected, suitable for directly or indirectly supporting the pallets.

Each shoulder is formed from a pair of stanchions 3 connected by stiffening diagonals, and each stanchion 3 is generally in the form of an open profile with a substantially rectangular section.

The longitudinal elements 1 are arranged between the opposite side faces of the pairs of front and rear stanchions 3 of adjacent shoulders of the shelving.

The diagonals of each shoulder, on the other hand, are arranged with the ends engaged in the channels defined by the open profile at the rear side of the front'stanchion and at the front side of the rear stanchion.

Going back to the system described in reference to the quoted figures, it has first means for removably connecting the joining plate 2 and the longitudinal element 1, the latter advantageously consisting of a single closed profile.

The first connection means comprise a first and at least a second fin 4 and 5 for engagement with the longitudinal element 1, formed in a single piece from a first flat base 5 for resting the joining plate 2 at the stanchion 3.

The first fin 4 is formed from a portion of the first base 6 sheared along.an open line that is bent perpendicularly to the first base itself, whereas the second fin 5 is formed from an extension of a first longitudinal edge 7 of the first base 6 and has a first portion 8 bent on the surface of the first base 6 and a second portion 9 bent perpendicularly to the first portion 8 and opposite the first fin 4.

The first fin 4 and the first portion 8 of the second fin 5 are substantially rectangular shaped, and the second portion 9 of the second fin 5 is also substantially rectangular shaped corresponding to that of the first fin 4.

The first connection means also comprise one or more first threaded holes 13 formed through the wall thickness of the first and second fin 4 and 5 and having a substantially conical flare, one or more second holes 14 formed through the wall thickness of the longitudinal element 1 and having a substantially conical flare corresponding to that of the first holes 13, and one or more fastening members 15 having a threaded stem 16 and a first head portion 17 having conicity substantially corresponding to that of the first and second holes 13 and 14.

In an alternative embodiment the holes 14 can also be without flare.

The fastening members 15 also have a second extreme head portion 18 that is polygonal, for example hexagonal.

When the system is assembled, the threaded stem of the fastening members 15 engages the threading of the first holes 13 taken into alignment with the second holes 14 through insertion of the first and second fin 4 and 5 in the head of the longitudinal element 1.

In the position of complete insertion of the first fin 4 and of the second portion 9 of the second fin 5, the conical portion 17 of the fastening members 15 is lined up with the conical flare of the second holes 14 in turn lined up with the conical flare of the first threaded holes 13.

Advantageously, the extension of the conical contact surfaces between the various parts contributes to increasing the degree of engagement by friction between the joining plate 2 and the longitudinal element 1.

The conical portion 17 of the fastening members 15 also ensures the self-centring of the fastening members 15, whereas the polygonal extreme portion 18 of the head of the fastening members 15 allows a high tightening torque to be obtained through a tool that can be normally found on the market, for example an alien wrench.

The first means for removably connecting the joining plate 2 and the longitudinal element 1 also advantageously comprise at least a third attachment fin 19 that can engage in a corresponding first slot 20.

More specifically, a pair of opposite third fins 19 is foreseen formed in a single piece from the upper edge of the first fin 4 and from the upper edge of the second portion 9 of the second fin 5, whereas the first slots 20 are formed through the wall thickness of the upper side of the longitudinal element 1.

The third fins 19 are substantially right-angled trapezium shaped with the perpendicular side facing towards the first portion 8 of the second fin 5.

During the assembly of the system, after the complete insertion of the first fin 4 and of the second portion 9 of the second fin 5 in the head of the longitudinal element 1 obtained through a first axial translation of the longitudinal element 1, the third fins 19 are inserted into the corresponding first slots 20 through a second translation of the longitudinal element 1 perpendicular to its axis.

The engagement of the third fins 19 with the relative first slots 20 allows not only the degree of engagement between the longitudinal element 1 and the joining plate 2 to be further increased, but also allows part of the shearing forces acting on the fastening members 15 to be discharged.

Indeed, when the longitudinal element 1 flexes due to the action of the weight of the pallet, the edge of the first slot 20 adjacent to the perpendicular side of the third fin 19 exerts a contact force on the perpendicular side of the third fin 19 that allows the shearing force transmitted to the fastening members 15 to be limited.

The longitudinal element 1 has a substantially rectangular section and a thickness of at least one of the sides that in use are arranged below and above equal to two or more times the wall thickness of the closed profile of which it consists.

Preferably, at least one of the sides of the longitudinal element 1 that in use are arranged below and above has at least a portion thereof formed from two or more layers of wall folded over each other into a packet. This allows the resistance to flexing of the longitudinal element 1 to be substantially increased.

For the same reason, the sides of said longitudinal element that that in use are arranged laterally have longitudinal reinforcement ribs 27.

More specifically, the side of the longitudinal element 1 that in use is arranged below has, in its central portion, a first curl 21 formed from four layers of wall folded over each other into a packet, whereas the side of the longitudinal element 1 that in use is arranged above has, in its side portions, a second and a third curl 22 and 23 formed from three layers of wall folded over each other into a packet.

The side of the longitudinal element 1 that in use is arranged above also has a longitudinal recess 24 defining an engagement channel for shelving accessories.

The longitudinal recess 24 is arranged centrally between the second and third curl 22 and 23 and has an access narrowing 25 to a widened seat 26.

As an example, the channel can be used for the engagement of tiles for the formation of continuous planes for loose material and/or of dividing cross-pieces for preventing items from falling.

The example tiles have a C-shaped profile having the legs and the extreme portions of the bridge that connects the squashed legs to reduced the bulk in height with respect to the longitudinal element 1.

The longitudinal element 1 also has a visual indicator of its side that in use is arranged above or below, to ease the work carried out by the operator of the elevating platform truck especially when he has to move pallets arranged in the high levels of the shelving.

Preferably, the visual indicator has a coloured strip 28 arranged at the apex or at the foot of the side of the longitudinal element 1 that in use is arranged on the front.

The joining plate 2 has at least a second flat support base 10 at the stanchion 3 extending perpendicularly from a second longitudinal edge 11 of the first flat base 6.

The system has second means for removably connecting the joining plate 2 and the stanchion 3,comprising at least a first plurality of tabs 12 formed in a single piece from the second base 10 of the joining plate 2 and able to be attached in corresponding one or more second slots (not shown) of the stanchion 3.

Preferably, the second base 10 of the joining plate 2 has a first and a second longitudinal row of tabs 12, 12 that can be attached in a corresponding first and second second longitudinal row of slots of the stanchion 3, one of which preferably extends perpendicular to the second base 10 and one of which extends with an inclination with respect to the second base 10.

Advantageously, as seen, the assembly process of the system foresees a first relative translation between the longitudinal element and the joining plate along the axis of the joining element for the creation of a first degree of engagement between the longitudinal element and the joining plate 2, and a second relative translation perpendicular to the first translation to increase the degree of engagement.

Of course, the machine for the assembly of the system comprises first moving means suitable for carrying out the first relative translation between the longitudinal element and the joining plate along the axis of the joining element, and second moving means suitable for carrying out the second translation perpendicular to the first translation.

The system comprising a longitudinal element and a perpendicular joining plate of said longitudinal element to a stanchion of pallet-holding shelving thus conceived can undergo numerous modifications and variants within the scope of the claims; moreover, all of the details can be replaced with technically equivalent elements.

In practice, the materials used, as well as the sizes, can be whatever according to the requirements and the state of the art.

## Claims

1. System comprising a longitudinal element (1) and a plate (2) for joining said longitudinal element (1) to a stanchion (3) of a pallet-holding shelving, said system having first means for removably connecting said joining plate (2) and said longitudinal element (1) consisting of a single closed profile and second means for removably connecting said joining plate (2) and said stanchion (3),
said joining plate (2) having a first support base (6) at said stanchion (3), said first support base being perpendicular to said longitudinal element (1) and said first connection means comprising a first (4) and at least a second (5) fin for engagement with said longitudinal element (1) formed in a single piece with said first base (6) of said joining plate (2), **characterised in that** said first (4) fin is formed from a portion of said first base (6) sheared along an open line, said portion being perpendicular to said first base (6), and said second fin (5) being formed from an extension of a first longitudinal edge (7) of said first base (6) and having a first portion (8) bent on the surface of said first base (6) and a second portion (9) bent perpendicular to said first portion (8) and opposite said first fin (4), to be parallel with said first fin (4).

2. System according to the previous claim, **characterised in that** said joining plate (2) has at least a second support base (10) at said stanchion (3) extending perpendicularly from a second longitudinal edge (11) of said first base (6).

3. System according to one or more of the previous claims, **characterised in that** said first connection means also comprise one or more first threaded holes (13) formed through the wall thickness of said first (4) and second (5) fin and having a substantially conical flare, one or more second holes (14) formed through the wall thickness of said longitudinal element (1) and having a substantially conical flare corresponding to that of said one or more first holes (13), and one or more fastening members (15) having a threaded stem (16) and a first head portion (17) having conicity substantially corresponding to that of said one or more first holes (13) and said one or more second holes (14).

4. System according to claim 3, **characterised in that** said one or more fastening members (15) have a second polygonal extreme head portion (18).

5. System according to one or more of the previous claims, **characterised in that** said first means for removably connecting said joining plate (2) and said longitudinal element (1) also comprise one or more third attachment fins (19) that can be engaged in corresponding one or more first slots.

6. System according to claim 5, **characterised in that** said one or more third fins (19) are formed in a single piece from the upper edge of said first (4) and second fin (5) and said one or more first slots (20) are formed through the wall thickness of the upper side of said longitudinal element (1).

7. System according to any one of claim 2 to 6, **characterised in that** said second connection means comprise at least a first plurality of tabs (12) formed in a single piece from said second base (10) of said joining plate (2) and able to be attached in corresponding one or more second slots of said stanchion (3).

8. System according to .one or more of claims 5 to 7, **characterised in that** said one or more first fins (4) are substantially rectangular shaped, said second portion of said one or more second fins (5) is substantially rectangular shaped corresponding to that of said one or more first fins (4), and said third fins (9) are substantially right-angled trapezium shaped.

9. System according to one or more of the previous claims, **characterised in that** said longitudinal element (1) has a substantially rectangular section and a thickness of at least one of the sides that in use are arranged below and above equal to two or more times the wall thickness of the closed profile of which it consists.

10. System according to one or more of the previous claims, **characterised in that** at least one of the sides of said longitudinal element (1) that in use are arranged below or above has at least a portion thereof formed from two or more layers of wall folded over each other into a packet.

11. System according to one or more of the previous claims, **characterised in that** the side of said longitudinal element (1) that in use is arranged above has a longicudinal recess defining an engagement channel for shelving accessories.

12. System according to one or more of the previous claims, **characterised in that** said longitudinal element (1) has a visual indicator of its side that in use is arranged above or below.

13. System according to claim 12, **characterised in that** said visual indicator has a coloured strip (28) arranged at the apex or at the foot of the side of said longitudinal element (1) that in use is arranged at the front.

14. System according to one or more of the previous claims, **characterised in that** the sides of said longitudinal element (1) that in use are arranged laterally have longitudinal reinforcement ribs.

15. Pallet-holding shelving, **characterised in that** it has a system comprising a longitudinal element (1) and a plate (2) for joining said longitudinal element (1) to a stanchion of said pallet-holding shelving according to one or more of the previous claims.

16. Assembly process of a system according to one or more previous claims 6 to 14, **characterised in that** it comprises a first relative translation between said longitudinal element (1) and said joining plate (2) along the longitudinal axis of said longitudinal element (1) for the creation of a degree of engagement between said longitudinal element (1) and said joining plate (2), and a second relative translation perpendicular to said first translation to increase said degree of engagement.

## Patentansprüche

1. Ein System, welches ein in Längsrichtung verlaufendes Element (1) sowie eine Platte (2) umfasst, um das besagte in Längsrichtung verlaufende Element (1) mit einer Stütze (3) von einem Regal, welches Paletten trägt, zu verbinden, wobei das besagte System eine erste Einrichtung besitzt, um die besagte Verbindungsplatte (2) abnehmbar mit dem besagten in Längsrichtung verlaufenden Element (1) zusammenzufügen, welches aus einem einzelnen geschlossenen Profil besteht, sowie eine zweite Einrichtung, um die besagte Verbindungsplatte (2) und die besagte Stütze (3) abnehmbar zusammenzufügen, wobei die besagte Verbindungsplatte (2) einen ersten Trägerboden (6) an der besagten Stütze (3) besitzt und sich der besagte Trägerboden (6) senkrecht zum besagten in Längsrichtung verlaufenden Element (1) befindet, und wobei die erste Verbindungseinrichtung eine erste (4) sowie mindestens eine zweite (5) Lamelle für eine formschlüssige Verbindung mit dem besagten in Längsrichtung verlaufenden Element (1) umfasst, welches in einem einzelnen Teil mit dem besagten ersten Boden (6) von der Verbindungsplatte (2) gebildet wird; **dadurch gekennzeichnet, dass** die besagte erste Lamelle (4) von einem Abschnitt des besagten ersten Bodens (6) gebildet wird, welcher entlang einer freien Strecke abgeschoren wurde; wobei der besagte Abschnitt sich senkrecht zum besagten ersten Boden (6) befindet, sowie dadurch, dass die zweite Lamelle (5) aus einer Ausdehnung einer ersten in Längsrichtung verlaufenden Kante (7) des besagten ersten Bodens (6) gebildet wird, wobei sie einen ersten Abschnitt (8) besitzt, welcher auf der Oberfläche des besagten ersten Bodens (6) umgebogen ist, sowie einen zweiten Abschnitt (9), welcher senkrecht zum besagten ersten Abschnitt (8) und entgegengesetzt zur besagten ersten Lamelle (4) umgebogen ist, damit er sich parallel zur besagten ersten Lamelle (4) befindet.

2. Ein System nach dem vorhergehenden Anspruch, **dadurch gekennzeichnet, dass** die besagte Verbindungsplatte (2) mindestens einen zweiten Trägerboden (10) an der besagten Stütze (3) besitzt, welcher sich senkrecht von einer zweiten in Längsrichtung verlaufenden Kante (11) des besagten ersten Bodens (6) ausdehnt.

3. Ein System nach einem oder mehreren der vorhergehenden Ansprüche, **dadurch gekennzeichnet, dass** die besagte erste Verbindungseinrichtung auch eine oder mehr erste Bohrungen mit Gewinde (13) umfasst, welche durch die Wanddicke der besagten ersten (4) und zweiten (5) Lamelle vorgenommen werden und grundsätzlich eine konische Ausdehnung besitzen; sowie dadurch, dass eine oder mehr zweite Bohrungen (14) durch die Wanddicke des besagten in Längsrichtung verlaufenden Elementes (1) vorgenommen werden und eine grundsätzlich konische Ausdehnung besitzen, welche mit jener der ersten oder mehr Bohrungen (13) übereinstimmt, sowie eines oder mehr Befestigungselemente (15), welche eine Gewindestange (16) sowie einen ersten Hauptabschnitt (17) besitzen, deren Kegelförmigkeit grundsätzlich mit jener der besagten einen oder mehreren ersten Bohrungen (13) sowie jener der besagten einen oder mehreren zweiten Bohrungen (14) übereinstimmt.

4. Ein System nach Anspruch 3, **dadurch gekennzeichnet, dass** eines oder mehr Befestigungselemente (15) ein zweites polygonales äußerliches Kopfstück (18) besitzen.

5. Ein System nach einem oder mehreren der vorhergehenden Ansprüche, **dadurch gekennzeichnet, dass** die besagte erste Einrichtung, um die besagte Verbindungsplatte (2) abnehmbar mit dem besagten in Längsrichtung verlaufenden Element (1) zusammenzufügen, ebenfalls eine oder mehr dritte Befestigungslamellen (19) umfasst, welche entsprechend in einen oder mehr erste Schlitze (20) einrasten können.

6. Ein System nach Anspruch 5, **dadurch gekennzeichnet, dass** die besagten eine oder mehr dritte Lamellen (19) in einem Einzelteil von der oberen Kante der besagten ersten (4) und zweiten (5) Lamelle gebildet werden, sowie dadurch, dass einer oder mehr erste Schlitze (20) durch die Wanddicke an der Oberseite des besagten in Längsrichtung verlaufenden Elementes (1) gebildet werden.

7. Ein System nach jedem der Ansprüche 2 bis 6, **dadurch gekennzeichnet, dass** das besagte zweite Verbindungselement mindestens eine erste Vielzahl von Laschen (12) umfasst, welche in einem Einzelteil von dem besagten zweiten Boden (10) der besagten Verbindungsplatte (2) gebildet werden und geeignet sind, in entsprechend einem oder mehr zweiten Schlitzen der besagten Stütze (3) angebracht zu werden.

8. Ein System nach einem oder mehreren der Ansprüche 5 bis 7, **dadurch gekennzeichnet, dass** eine oder mehr erste Lamellen (4) grundsätzlich rechteckig geformt sind, wobei der besagte zweite Abschnitt der besagten einen oder mehr zweiten Lamellen (5) grundsätzlich rechteckig in Übereinstimmung mit den besagten einen oder mehr ersten Lamellen (4) geformt ist und die besagten dritten Lamellen (9) grundsätzlich rechtwinklig trapezförmig sind.

9. Ein System nach einem oder mehreren der vorhergehenden Ansprüche, **dadurch gekennzeichnet, dass** das besagte in Längsrichtung verlaufende Element (1) einen grundsätzlich rechteckigen Abschnitt sowie eine Dicke besitzt, welche mindestens einer der Seiten entspricht, die während der Benutzung darunter und darüber doppel oder mehrfach so gross wie die Wanddicke des geschlossenen Profils angebracht sind, aus welcher es besteht.

10. Ein System nach einem oder mehreren der vorhergehenden Ansprüche, **dadurch gekennzeichnet, dass** mindestens eine der Seiten des besagten in Längsrichtung verlaufenden Elementes (1), welche bei Benutzung darüber oder darunter angebracht sind, mindestens einen Abschnitt besitzt, welcher aus zwei oder mehr Wandschichten gebildet wird, die übereinander in ein Paket gefaltet werden.

11. Ein System nach einem oder mehreren der vorhergehenden Ansprüche, **dadurch gekennzeichnet, dass** die Seite des besagten in Längsrichtung verlaufenden Elementes (1), welche bei der Benutzung darüber angebracht ist und eine in Längsrichtung verlaufende Nische besitzt, welche einen einrastenden Kanal für Regalzubehör bestimmt.

12. Ein System nach einem oder mehreren der vorhergehenden Ansprüche, **dadurch gekennzeichnet, dass** das besagte in Längsrichtung verlaufende Element (1) eine Sichtanzeige an seiner Seite besitzt, welche bei der Benutzung darüber oder darunter angeordnet ist.

13. Ein System nach Anspruch 12, **dadurch gekennzeichnet, dass** die besagte Sichtanzeige einen farbigen Streifen (28) besitzt, welcher am Oberteil oder am Boden der Seite des besagten in Längsrichtung verlaufenden Elementes (1) angeordnet, welches bei der Benutzung an der Vorderseite angeordnet ist.

14. Ein System nach einem oder mehreren der vorhergehenden Ansprüche, **dadurch gekennzeichnet, dass** die Seiten des besagten in Längsrichtung verlaufenden Elementes (1), welche bei der Benutzung seitlich angeordnet sind, in Längsrichtung verlaufende Verstärkungslamellen besitzen.

15. Ein Regal zum Tragen von Paletten, **dadurch gekennzeichnet, dass** es ein System besitzt, welches ein in Längsrichtung verlaufendes Element (1) sowie eine Platte (2) umfasst, um das besagte in Längsrichtung verlaufende Element (1) mit einer Stütze des besagten Regals zum Tragen von Paletten nach einem oder mehreren der vorhergehenden Ansprüche zu verbinden.

16. Montageverfahren eines Systems nach einem oder mehreren der vorhergehenden Ansprüche 6 bis 14, **dadurch gekennzeichnet, dass** es eine erste relative Verschiebung zwischen dem besagten in Längsrichtung verlaufenden Element (1) und der besagten Verbindungsplatte (2) entlang der Längsachse des besagten in Längsrichtung verlaufenden Elementes (1) umfasst, um eine Einrastungsstufe zwischen dem besagten in Längsrichtung verlaufenden Element (1) und der besagten Verbindungsplatte (2) zu bilden, sowie dadurch, dass es eine zweite relative Verschiebung senkrecht zur besagten ersten Verschiebung umfasst, um die besagte Einrastungsstufe zu steigern..

## Revendications

1. Système comportant un élément longitudinal (1) et une plaque (2) pour raccorder l'élément longitudinal (1) susdit à un montant d'un rayonnage à palette, ledit système ayant premiers moyens pour relier amoviblement ladite plaque de raccordement (2) à l'élément longitudinal (1) susdit constitué d'un seul profil fermé et seconds moyens pour raccorder amoviblement ladite plaque de raccordement (2) au montant (3) susdit,
ladite plaque de raccordement (2) ayant une première embase de soutien (6) dans le montant (3) susdit, ladite première embase de soutien (6) étant perpendiculaire par rapport à l'élément longitudinal (1) susdit et lesdits premiers moyens de raccordement comportant une première (4) et au moins une seconde (5) ailette d'emboîtement avec l'élément longitudinal (1) susdit formant une pièce unique avec la première embase (6) susdite de ladite plaque de raccordement (2), **caractérisé en ce que**
la première ailette (4) susdite est formée à partir d'une portion de la première embase (6) susdite tronçonnée le long d'une ligne ouverte, ladite portion étant perpendiculaire par rapport à la première embase (6) susdite, et la seconde ailette (5) susdite étant formée à partir d'une étendue d'un premier bord longitudinal (7) de la première embase (6) susdite et ayant une première portion (8) repliée sur la surface de la première embase (6) susdite et une seconde portion (9) repliée perpendiculairement à la première portion (8) susdite et vis-à-vis de la première ailette (4) susdite pour qu'elle soit parallèle à la première ailette (4) susdite.

2. Système selon la revendication précédente, **caractérisé en ce que** la plaque de raccordement (2) susdite a au moins une seconde embase de soutien (10) dans le montant (3) susdit s'étendant perpendiculairement à partir d'un second bord longitudinal (11) de la première embase (6) susdite.

3. Système selon l'une ou plusieurs des revendications précédentes, **caractérisé en ce que** les premiers moyens de raccordement susdits comportent aussi un ou plusieurs premiers trous filetés (13) formés à travers l'épaisseur de la paroi des première (4) et seconde (5) ailettes susdites et ayant une fraisure substantiellement conique, un ou plusieurs seconds trous (14) formés à travers l'épaisseur de la paroi de l'élément longitudinal (1) susdit et ayant une fraisure substantiellement conique correspondant à celle de l'un ou plusieurs premiers trous (13) susdits, et un ou plusieurs membres de fixation (15) ayant une tige filetée (16) et une première portion de tête (17) ayant une conicité correspondant substantiellement à celle de l'un ou plusieurs premiers trous (13) susdits et l'un ou plusieurs seconds trous (14) susdits.

4. Système selon la revendication 3, **caractérisé en ce que** l'un ou plusieurs membres de fixation (15) susdits ont une seconde portion de tête extrême polygonale (18).

5. Système selon l'une ou plusieurs des revendications précédentes, **caractérisé en ce que** les premiers moyens susdits pour raccorder amoviblement la plaque de raccordement (2) susdite à l'élément longitudinal (1) susdit comportent aussi une ou plusieurs troisièmes ailettes d'attelage (19) qui peuvent être emboîtées dans l'une ou plusieurs premières fentes (20) y correspondant.

6. Système selon la revendication 5, **caractérisé en ce que** l'une ou plusieurs troisièmes ailettes (19) susdites forment une pièce unique à partir du bord supérieur des première (4) et seconde (5) ailettes susdites et que l'une ou plusieurs premières fentes (20) susdites sont formées à travers l'épaisseur de la paroi du côté supérieur de l'élément longitudinal (1) susdit.

7. Système selon l'une quelconque des revendication 2 à 6, **caractérisé en ce que** les seconds moyens de raccordement susdits comportent au moins une première pluralité de pattes (12) formées dans une seule pièce à partir de la seconde embase (10) susdite de ladite plaque de raccordement (2) et pouvant être attelées dans l'une ou plusieurs secondes fentes y correspondant du montant (3) susdit.

8. Système selon l'une ou plusieurs des revendications 5 à 7, **caractérisé en ce que** l'une ou plusieurs premières ailettes (4) susdites présentent substantiellement une forme rectangulaire, que la seconde portion susdite de l'une ou des plusieurs secondes ailettes (5) susdites présente une forme substantiellement rectangulaire correspondant à celle de l'une ou des plusieurs premières ailettes (4) susdites, et que les troisièmes ailettes (19) susdites présentent une forme substantiellement trapézoïdale à angle droit.

9. Système selon l'une ou plusieurs des revendications précédentes, **caractérisé en ce que** l'élément longitudinal (1) susdit a une section substantiellement rectangulaire et une épaisseur d'au moins un des côtés qui sont aménagés, par-dessous et par-dessus, pendant leur fonctionnement, qui est égale à deux fois ou même davantage l'épaisseur de la paroi du profil fermé dont il est constitué.

10. Système selon l'une ou plusieurs des revendications précédentes, **caractérisé en ce qu'**au moins l'un des côtés de l'élément longitudinal (1) susdit qui est aménagé par-dessous ou par-dessus, pendant son fonctionnement, a au moins une portion formée à partir de deux ou plusieurs couches de paroi repliées l'une sur l'autre dans un paquet.

11. Système selon l'une ou plusieurs des revendications précédentes, **caractérisé en ce que** le côté de l'élément longitudinal (1) susdit qui est aménagé par-dessus, pendant son fonctionnement, a une niche longitudinale définissant un canal d'emboîtement pour les accessoires du rayonnage.

12. Système selon l'une ou plusieurs des revendications précédentes, **caractérisé en ce que** l'élément longitudinal (1) susdit a un indicateur visuel de son côté qui est aménagé par-dessus ou par-dessous, pendant son fonctionnement.

13. Système selon la revendication 12, **caractérisé en ce que** l'indicateur visuel susdit a une bande colorée (28) aménagée soit à l'apex soit en bas du côté de l'élément longitudinal (1) susdit qui est aménagé par-devant, pendant son fonctionnement.

14. Système selon l'une ou plusieurs des revendications précédentes, **caractérisé en ce que** les côtés de l'élément longitudinal (1) susdit, aménagés latéralement pendant leur fonctionnement, ont des nervures de renforcement longitudinales.

15. Rayonnage à palette, **caractérisé en ce qu'**il a un système comportant un élément longitudinal (1) et une plaque (2) pour raccorder l'élément longitudinal (1) susdit à un montant dudit rayonnage à palette selon l'une ou plusieurs des revendications précédentes.

16. Procédé d'assemblage d'un système selon l'une ou plusieurs des revendications précédentes 6 à 14, **caractérisé en ce qu'**il comporte une première translation relative entre l'élément longitudinal (1) susdit et ladite plaque de raccordement (2) le long de l'axe longitudinal de l'élément longitudinal susdit (1) pour la création d'un degré d'emboîtement entre l'élément longitudinal (1) susdit et ladite plaque de raccordement (2), et une seconde translation relative perpendiculaire par rapport à la première translation susdite pour augmenter ledit degré d'emboîtement.
